(19) Europäisches Patentamt
European Patent Office
Office européen des brevets

(11) **EP 4 401 377 A2**

(12) **EUROPEAN PATENT APPLICATION**

(43) Date of publication:
**17.07.2024 Bulletin 2024/29**

(21) Application number: **23218302.0**

(22) Date of filing: **19.12.2023**

(51) International Patent Classification (IPC):
**H04L 43/026** (2022.01)   **H04L 47/2441** (2022.01)
**H04L 47/2475** (2022.01)   **H04L 47/2483** (2022.01)
**H04L 41/16** (2022.01)   **H04L 43/028** (2022.01)
**H04L 47/24** (2022.01)

(52) Cooperative Patent Classification (CPC):
**H04L 43/026; H04L 47/2441; H04L 47/2475;**
**H04L 47/2483;** G06N 20/00; H04L 41/16;
H04L 43/028; H04L 47/24

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **20.12.2022 US 202263433919 P**
**22.12.2022 US 202263476811 P**

(71) Applicant: **Sandvine Corporation**
**Waterloo, Ontario N2L 3V3 (CA)**
(72) Inventors:
• **PALANISAMY, Anuram**
**641109 Coimbatore (IN)**
• **HAVANG, Alexander**
**211 20 Malmo (SE)**
• **KARANTH, Pradeep**
**560076 Bengaluru (IN)**
• **MITTAL, Ambuj**
**560103 Bengaluru (IN)**
• **VINAYAKA, Jujare**
**560037 Bengaluru (IN)**
• **KURUVILLA, Ousef**
**560066 Bengaluru (IN)**
• **MADHUSUDAN, Mridula**
**690561 Kollam (IN)**
• **KULSHRESTHA, Vishal**
**560076 Bengaluru (IN)**
• **STOCKER, Christopher**
**Apex, 27502 (US)**

(74) Representative: **Ipey**
**Apex House**
**Thomas Street**
**Trethomas**
**Caerphilly CF83 8DP (GB)**

(54) **SYSTEM AND METHOD FOR TRAFFIC FLOW CONTENT CLASSIFICATION AND CLASSIFICATION CONFIDENCE LEVEL**

(57)   A system and method for classifying application and content in a computer network. The method including: determining an application associated with a traffic flow; determining at least one type of content category associated with the application; reviewing packet parameters to determine the content category of the traffic flow; and monitoring the traffic flow for any changes to the packet parameters that would indicate a change in the content category of the traffic flow. The system including: an application module configured to determine an application associated with a traffic flow; a signature module, a heuristic module and a machine learning module configured to review packet parameters to determine a content category associated with the traffic flow and any changes to the content category associated with the traffic flow. A system and method for determining a confidence level of a classification of an application and content category of a traffic flow.

Figure 1

**Description**

**RELATED APPLICATIONS**

The present application claims priority to U.S. Provisional Patent Application No. 63/433,919 filed December 20, 2022, and to U.S. Provisional Patent Application No. 63/476,811 filed December 22, 2022, which are hereby incorporated in their entirety herein.

**FIELD**

The present disclosure relates generally to computer network traffic. More particularly, the present disclosure relates to a system and method for classifying application category and content category of a traffic flow in a computer network and, in some cases, a confidence level of a classification of the traffic flow in the computer network.

**BACKGROUND**

Service Providers, including Internet Service Providers (ISPs) as well as content providers, generally try to provide the best Quality of Service (QoS) to the largest number of users given network constraints. As more people access content via online networks and as users increase the amount of data used, congestion continues to grow. As such, various congestion control strategies have been used to attempt to improve the Quality of Service (QoS) and the Quality of Experience (QoE) for users on the network. Further, various congestion control strategies based on types of traffic (for example on applications or content) have been used to attempt to improve the Quality of Service (QoS) and the Quality of Experience (QoE), but this can be difficult without insight into the traffic. Due to these difficulties, it is sometimes necessary to predict the application or content of the traffic flow based on various factors.

Users may experience various levels of QoE, which may differ based on application and the content delivered by the application. Operators of computer networks try to provide high levels of QoE across various applications, but as applications may be able to provide a variety of different types of traffic flows, some traffic flows may be more affected by latency, loss, or other issues. Operators may wish to provide traffic management based on the type of content within the flow to allow for congestion management as well as maintain high levels of QoE across users.

As such, there is a need for an improved method and system for classifying the application and the content of a computer traffic flow. There is also there is a need for an improved method and system for determining a confidence level of a classification for the application and the content of a computer traffic flow.

The above information is presented as background information only to assist with an understanding of the present disclosure. No determination has been made, and no assertion is made, as to whether any of the above might be applicable as prior art with regard to the present disclosure.

**SUMMARY**

In a first aspect, there is provided a method for classifying application and content in a computer network, the method including: determining an application associated with a traffic flow; determining at least one type of content category associated with the application; reviewing packet parameters to determine the content category of the traffic flow; and monitoring the traffic flow for any changes to the packet parameters that would indicate a change in the content category of the traffic flow.

In some cases, the packet parameters include signatures of the traffic flow and determining the content category include matching the signature of the traffic flow with a previously stored signature of the content category.

In some cases, the packet parameters include bincode entry functions and determining the content category include reviewing the bincode and a bitrate of the traffic flow.

In some cases, the method may further include monitoring the traffic flow for a predetermined evaluation time prior to determining an application associated with the traffic flow.

In some cases, the monitoring of the traffic flow includes waiting for a predetermined number of packets before evaluating whether there has been a change in the content category.

In another aspect, there is provided a system for classifying application and content in a computer network, the system including: an application module configured to determine an application associated with a traffic flow; a signature module, a heuristic module and a machine learning module configured to review packet parameters to determine a content category associated with the traffic flow and any changes to the content category associated with the traffic flow.

In some cases, the signature module is configured to determine packet parameters comprising of signatures of the traffic flow and determine the content category comprises matching the signature of the traffic flow with a previously stored signature of the content category.

In some cases, the heuristic module is configured to determine packet parameters comprising bincode entry functions and determine the content category comprises reviewing the bincode and a bitrate of the traffic flow.

In some cases, the traffic flow is monitored for a predetermined evaluation time prior to determining an application associated with the traffic flow.

In some cases, the monitoring of the traffic flow includes waiting for a predetermined number of packets before evaluating whether there has been a change in the content category.

In yet another aspect, there is provided a method for determining a confidence score of an application or content classification of network traffic, the method including: determining an application or content classification of a traffic flow; determining a test matrix for the application or content classification; determining test results based on the test matrix; and determining a confidence score based on the test matrix.

In some cases, the method further includes: determining any increase or decrease to the confidence score in comparison to a previously determined confidence score for the application or content classification; and determining any changes to any traffic policies based on the increase or decrease of the confidence score.

In some cases, the method further includes preparing a summary with details as to the increase or decrease in the confidence score.

In some cases, determining an application or content classification includes determining whether the application is a top used application.

In some cases, if the application is a top used application the method includes determining a priority level for each test in the test matrix.

In some cases, if the application is a top used application, determining test results includes: determining a pass or fail result per test in the test matrix; determining a consistency factor fear each test; and determining if any planned test in the test matrix was not run.

In some cases, if the application is not a top used application determining a test matrix includes: determining a signature adaptability of the application or content classification; determining trend analysis of the application or content classification; and determine a ticket count for the application or content classification.

In some cases, the ticket count is reviewed a plurality of consecutive time periods.

In some cases, the ticket count is determined by subscriber tickets, internal tickets and external tickets.

In still yet another aspect, there is provided a system for classifying application and content in a computer network, the system including: an application module configured to determine application and application category parameters, a content category configured to determine content and content category parameters, a confidence score module configured to determine a test matrix associated with the content and/or application parameters and determine a confidence level associated with the classification of the application and/or content.

In some cases, the system further includes a monitoring module configured to determine any increase or decrease to the confidence score in comparison to a previously determined confidence score for the application or content classification and determine any changes to any traffic policies based on the increase or decrease of the confidence score.

In some cases, the system is further configured to prepare a summary with details as to the increase or decrease in the confidence score.

In some cases, the application module is configured to determine an application or content classification includes and determine whether the application is a top used application.

Other aspects and features of the present disclosure will become apparent to those ordinarily skilled in the art upon review of the following description of specific embodiments in conjunction with the accompanying figures.

## BRIEF DESCRIPTION OF FIGURES

Embodiments of the present disclosure will now be described, by way of example only, with reference to the attached Figures.

Figure 1 illustrates a diagram of a computer network architecture including an embodiment of a system for application and content classification;
Figure 2 illustrates a method for classifying applications of a traffic flow;
Figure 3 illustrates a system for application and content classification according to an embodiment;
Figure 4A illustrates various application categories including standard categories and augmented categories;
Figure 4B illustrates various top applications associated with the application categories of figure 4A;
Figure 5 illustrates various content categories associated with application categories;
Figure 6 is a flow chart for signature classification according to an embodiment;
Figure 7 is a flow chart illustrating heuristic classification according to an embodiment;
Figure 8 is a flow chart illustrating machine learning classification according to an embodiment;

Figure 9 illustrates an application and content classification according to a specific example;

Figure 10 illustrates various subscribers accessing data from various types of devices and networks;

Figure 11 illustrates a system for determining a confidence level of a classification in an example embodiment;

Figure 12 illustrates a method for determining a confidence level of a classification in an example embodiment;

Figure 13 illustrates an example test matrix that may influence a classification;

Figure 14 is a table illustrating various scenarios and test run results;

Figure 15 is an example of an application test matrix results;

Figure 16 is a table showing base confidence scores for non-top applications on a network;

Figure 17 illustrates various scenarios and the associated confidence score calculations according to an embodiment; and

Figure 18 illustrates various applications and the confidence score calculations according to an embodiment.

## DETAILED DESCRIPTION

In the following, various example systems and methods will be described to provide example embodiment(s). It will be understood that no embodiment described below is intended to limit any claimed invention. The claims are not limited to systems, apparatuses or methods having all of the features of any one embodiment or to features common to multiple or all of the embodiments described herein. A claim may include features taken from any embodiment as would be understood by one of skill in the art. The applicants, inventors or owners reserve all rights that they may have in any invention disclosed herein, for example the right to claim such an invention in a continuing or divisional application and do not intend to abandon, disclaim or dedicate to the public any such invention by its disclosure in this document.

Generally, the present disclosure provides a method and system of classifying an application as well as the content of a traffic flow. As applications may include various content in a single session, Quality of Experience (QoE) may vary based on the content being delivered, even in the same application. The system is configured to determine an application at the beginning of a flow. The system may continue to monitor the traffic flow, for example at periodic intervals, to determine whether the content type provided by the application has changed or if the content type remains the same. Policies or traffic actions may be applied to the traffic flow based, for example, on the content being delivered in addition to or instead of based only on the application being accessed.

Further, the present disclosure provides a method and system for determining a confidence level or confidence score of an application and/or a content classification of a traffic flow. The system and method are configured to determine various circumstances that may affect the application; review the application traffic flow patterns in various network conditions and with various circumstances; determine the confidence score of the classification based on the circumstances and the traffic flow patterns and provide detail with respect to any increase or decrease in the confidence score.

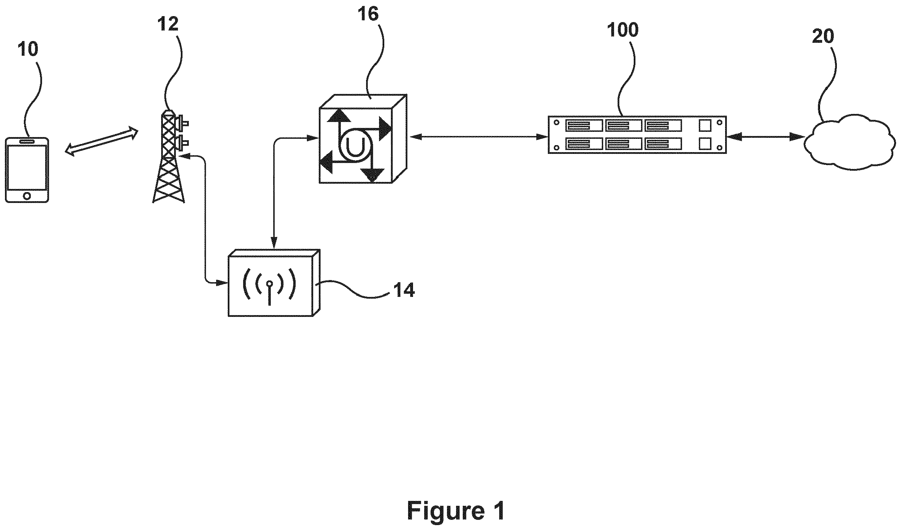

Figure 1 illustrates an environment for an embodiment of the system. A subscriber, using a user device 10, may initiate a traffic flow with a base station 12. The traffic flow may be transmitted to and from a core network 14 from the base station. The traffic flow may be seen and directed by the operator network 16 and may be reviewed and classified by a system 100 for determining application and content. The system 100 may be included as a component of a network device which resides between the operator's gateway and the Internet 20. The system 100 is intended to reside within the operator's or Internet Service Provider's (ISP's) network 16. It will be understood that embodiments of the system and method detailed herein are intended to be employed over any type of computer network, for example, fixed line, mobile, satellite or other computer network.

The system 100 is configured to be transparent to users. It will be understood that figure 1 illustrates a high-level network architecture and that a computer network may include further aspects not illustrated.

The system 100 for determining application QoE is intended to reside in the core network. In particular, the system 100 is intended to be in a location where the system is able to access the data noted herein. It will be understood that in some cases the system may be a physical network device or may be a virtual network device. The system may also be distributed over a number of physical or virtual devices. It will be understood that the system may be used on any IP based networking system, for example, Wi-Fi based, mobile data networks like GPRS, CDMA, 4G, 5G, LTE, satellite based, WLAN based networks, fixed line broadband fiber optic networks as well as on virtual private networks.

Embodiment of the system and method disclosed herein are intended to classify both the application of the traffic flow as well as the content within the traffic flow. Typically, existing systems use a type of Application Recognition to determine a corresponding application belonging to a flow or a set of flows. These applications are grouped into categories sometimes referred to as Application Category. Applications having similar purposes are typically put in the same category. Conventionally, traffic belonging to the application is classified under the Applications category.

It has been noticed that as applications develop, they can support a plurality of content types in a single application. For example, Netflix may include web-browsing, video streaming or gaming, while WhatsApp may include video or voice calls as well as standard text messages. Embodiments of the system and method detailed herein are intended to identify content categories well as an application category to address the situation where a plurality of content types is associated with the same application. Once different content categories are associated with a traffic flow of an application, an Application QoE can be calculated differently for different content categories, giving a more granular view. Embodiments of the system and method are intended to allow the operator to see how well Application QoE is for a specific content category for the application. In a particular example, an operator may be able to determine an application QoE score for Netflix when a user is browsing content separately from when the user is streaming videos. Embodiments of the system and method are intended to allow for Analytics, Policy control, congestion management and capacity planning to be done more accurately than traditional systems that do not review content category.

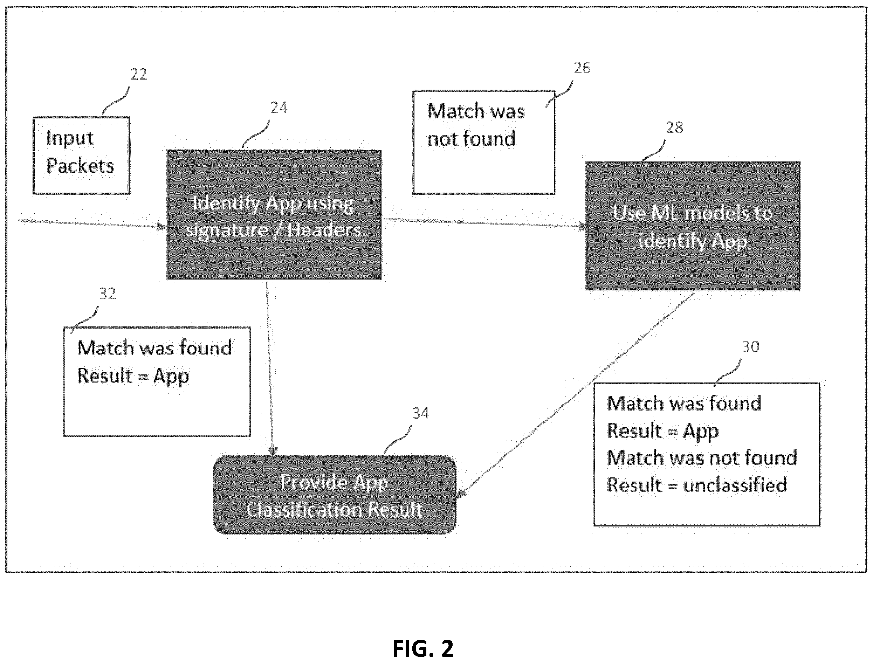

In a conventional Deep Packet Inspection system offering application recognition, there are often two stages of processing as shown in Figure 2. Packets are received via an input, at 22 and DPI may use packet headers and signatures for Application Recognition at 24. If a match is not found, at 26, the second stage uses machine learning, at 28. If recognition succeeds at either 30 or 32, the application recognized for the given flow/flows is provided to consumer, at 34. The consumer is likely to be the network operator or the like. It is possible that neither strategy will be able to recognize application for the given flow, in which case the flow is marked unclassified.

The flow or a set of flows belonging to an application are generally classified into an application, and each application is classified into a category referred to generally as Application Category. For example, Social Network applications will be classified under "Social Media". The applications are mapped to an application category by using its primary purpose of use. The primary purpose of use is generally determined through the advertisement or information regarding the application.

Unfortunately, there are some limitations in the conventional solution. Typically, applications will have only one category based on how it was listed by its original entry, by the company that created it or the like. It has been determined that applications may actually belong to more than one application category. In a specific example, WhatsApp even though a primary purpose is chat, could also be classified under conferencing / communication. It will be understood that the purpose may be different depending on how the application is used (and the content in use). As an example, it will be understood that chats are not needed for voice calls and voice calls are not needed for chats. As such, WhatsApp may be better represented if identified under multiple categories, depending on the use and/or content used.

The concept of content category is intended to be applied based on actual traffic flow. Even when an application is having a single purpose, for example a television streaming service with no gaming, may still require the ability to provide a way for users to browse and/or search videos. Therefore, the television streaming service may have only one application category because streaming video is its primary purpose. The web browsing content category is only needed to support streaming video application and is not provided independent of the purpose. Its traffic when classified may need to use content category. In this example, the TV streaming service supports browsing and streaming, so embodiment of the system and method may want to identify when it is doing each of the various aspects. An operator may be interested in statistics about how many bytes was streamed using the TV streaming services and how many bytes were browsed using the same TV streaming service.

Currently, an application also has a choice (based on its implementation) whether it uses the same flow or different flows for both content types. For example, Facebook can do photo and video upload in the same connection and/or flow. If it uses the same connection, embodiments of the system and method are intended to continuously evaluate the content category because the content could change any time. In a specific example, this could be seen by a user first uploading photos, then doing some other activity on Facebook that may be part of same flow.

Further, it has been noted that different types of activities may use different flows or may be multiplexed on the same flow. The flows need to be classified accordingly into content categories as the flows may not have the correct policies applied if merely classified into application type. Statistics for applications in use (for example, number of bytes, frequency of use, features used, bytes per types of content, and the like) are very useful for an operator to understand how the network is being used. If application has multiple types of content, then this information influences these statistics to be considered. Further, for policy implementation of traffic actions, it is preferable to know what type of content the traffic is as well as the application.

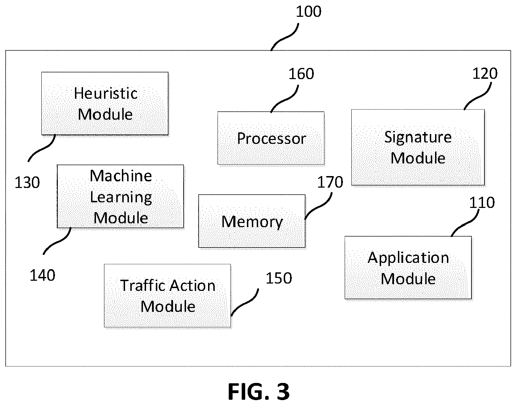

Figure 3 illustrates a system for classifying application and content of traffic flows. The system is intended to include an application module 110, a signature module 120, a heuristic module 130, a machine learning module 140, a traffic action module 150, at least one processor 160 and at least one memory component 170. The system is generally intended to be distributed and reside in the data plane. A central processing unit or the control processor may be configured to execute the instructions stored in the memory component in order for the modules to execute their functions.

The application module 110 is configured to determine an application and application category associated with a traffic flow or set of flows. The signature module 120 may review the traffic patterns and based on previously known signatures determine the content category of the traffic flow. Depending on, for example the application, the traffic flow may be reviewed periodically by the signature module 120, for example every 10 seconds, 15 seconds, or the like.

The heuristic module 130 may review a traffic flow as detailed herein. The heuristic module 130 may review the flow periodically, for example, every 10 seconds, 15 seconds, or the like. The machine learning module 140 may review traffic flows of particular applications as detailed herein.

The traffic action module 150 is configured to provide for a policy action based on the determined application and content type and the predetermined policies set by the operator or customer. The policy action applied by, for example, the traffic action module 150 or determined by the traffic action module and applied by another network device can be based on the conditions that includes application, application category, content category or a more complex condition involving a mix of these. In a specific example, the conditions may be as follows:

```
if (application_category = streaming and content_category=streaming_video) then ShapeVideoAction()
if (application_category not= streaming and content_category=streaming_video) then ShapeGeneralAppVideoAction()
```

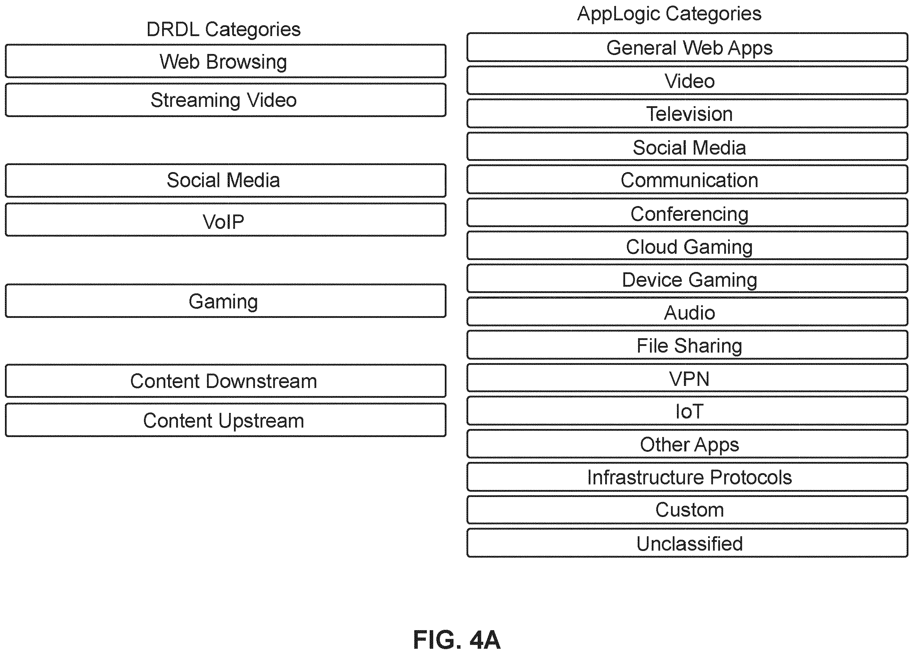

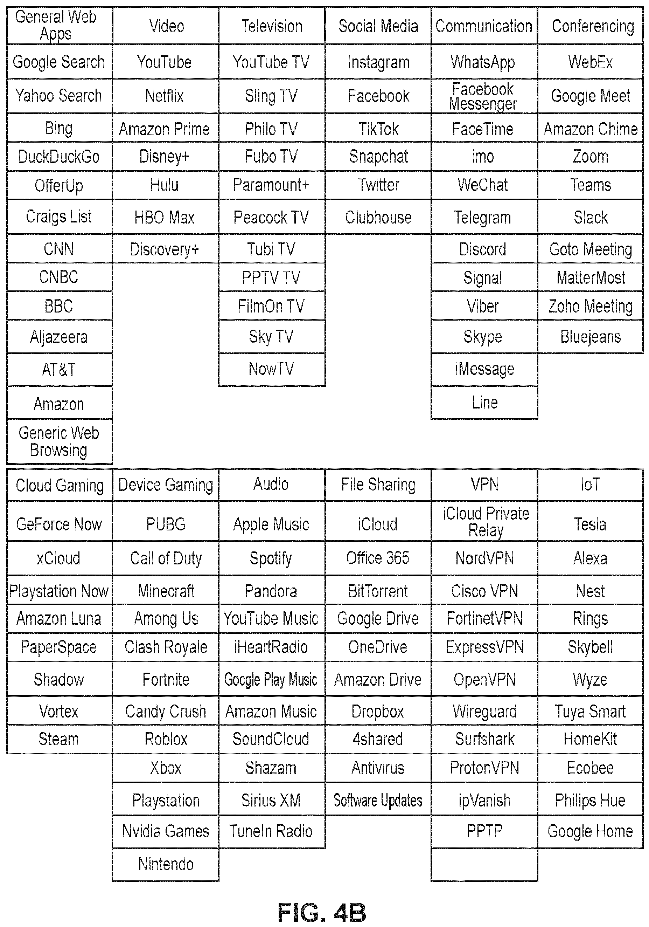

The system is configured to identify the application and application category. Figure 4A illustrates an example of application categories, including traditional categories and categories intended to be used by embodiments of the system and method detailed herein. Figure 4B illustrates an example set of applications tied to the application categories that are shown in figure 4A. The application may be identified using, for example, current methods of signatures or machine language. The application module is further configured to classify the application into a Primary Application Category. The Primary Application Category is intended to be based on the primary purpose of the application. The primary purpose can be determined by, for example, the purpose documented by publisher of the application on its website or on the app store, by how the application is being used, or the like.

An application may be classified optionally into a plurality of application categories, either permanently, or dynamically. Fixed mapping is used to indicate which application categories an application can belong to. If actual usage of application is involved, the classification may be dynamic: for example, if a single application supports conference calls and streaming video, then the application can be classified for the purpose of statistics based on the actual use of application. However, in cases where the system is configured to provide statistics regarding network use, then the statistics needs to be split based on measurements across different application categories.

The signature module, heuristic module and machine learning module are configured to determine an application's content category based on the traffic flow and the associated traffic flow parameters. If an application is known to have only a specific type of content, then the mapping to Content Category is done by a direct mapping of Application Name to the Content Category. If an application can carry a plurality of types of content, then the content category is determined by using one or a combination of, for example, signatures, regex, heuristics, machine learning, or statistical analysis.

If the application uses different flows for different types of content categories, then the identification may be completed initially at the beginning of each different flow. If the application uses the same flow for different content categories, the identification may be required to be done continuously or periodically to ensure the traffic flow continues to be mapped to the correct content category.

As an optimization, a full evaluation may be completed at the beginning of the flow and then, depending on what various content categories application uses, a simplified approach may be used where the traffic pattern is analyzed by statistics (for example, bytes per second, time between peaks, width and/or density of transfers, or the like) and if a change in pattern is detected, further evaluation may be completed by the system for content category identification.

As an added input, the system may use a lookup server IP+Port to identify what various content categories are possible for the server IP and Port. This may further reduce the states that the embodiment of the system and method may have to process to analyze the content.

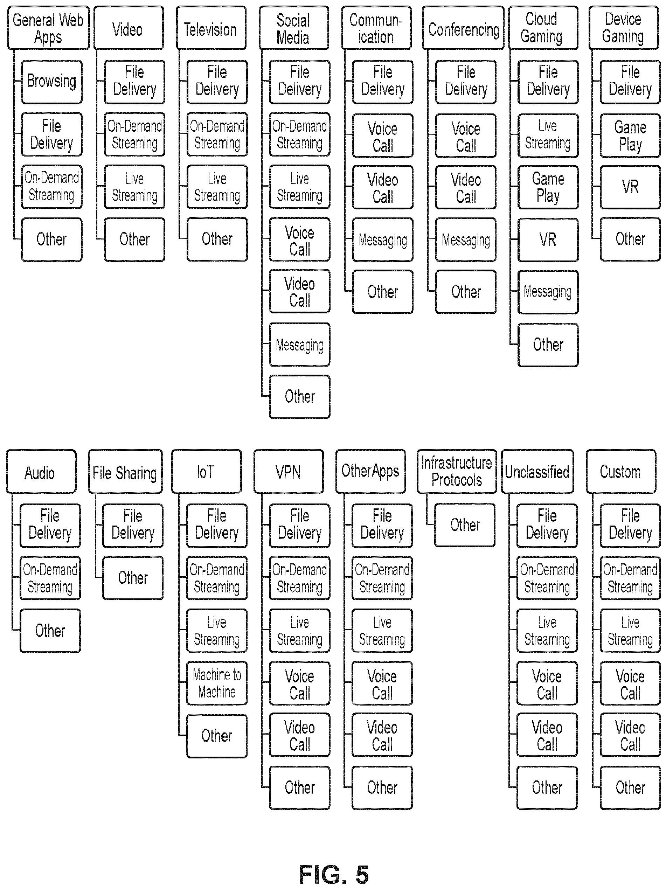

Figure 5 illustrates an example of a classification of applications into content categories. Figure 5 is an example intended to indicate, which content categories are typically found in Application Categories. For a given application category, these may be the only content types that need to be checked. Some applications create different flows for different content types whereas many multiplex a plurality of content types into a single flow.

Embodiments of the system can be configured, on review of a new traffic flow to classify the application associated with the traffic flow. In embodiments of the method to classify into application categories, the applications are intended to be grouped into categories based on the application's primary purpose based on, for example, an app store or publishers' description, or the like.

On classification of the application, or in determining the application is not able to be classified, the system may then classify the content of the traffic flow. In some cases, the system may directly map the content to a content category based on the application. For example, once the application is classified, for applications that use exactly one content category as part of their traffic, this mapping can be done directly. An example of this type of application may be a website that allows web browsing but does not include video streaming or other content category.

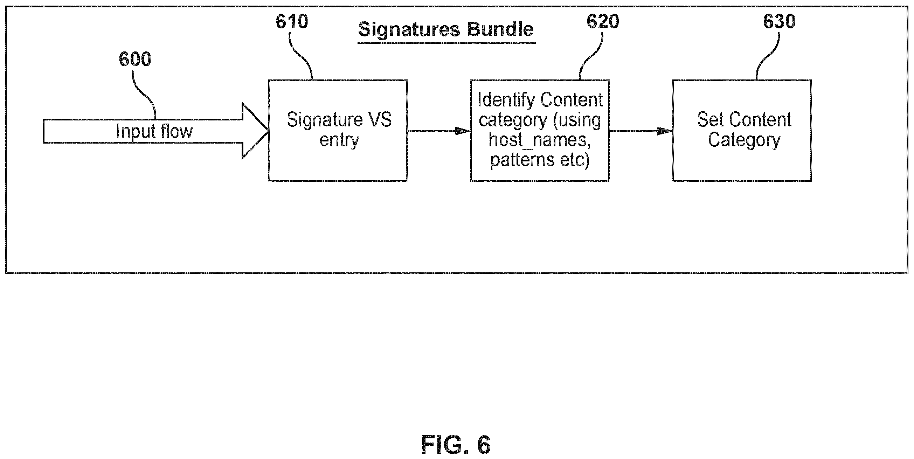

Figure 6 is a flow chart illustrating an embodiment of a method of content classification using signatures. Certain content categories can be identified using domain names, traffic patterns, or the like. At 600, the signature module may receive a traffic flow to review. At 610 the signature module may compare the signature of the input flow to various stored entries. At 620, the signature may identify the content category which may then be sent for the traffic flow. These can be classified using various Application Recognition methods, for example, DataStream Recognition definition Language (DRDL) signatures and/or using the state machine therein. At 630, the signature module sets the content category for the flow.

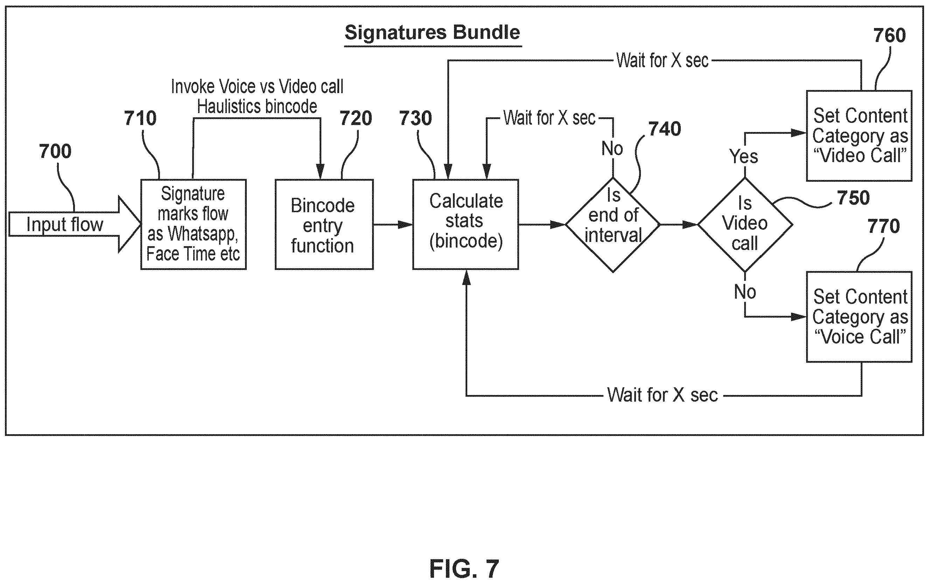

Figure 7 is a flow chart illustrating an embodiment of a method of content classification using heuristic measurements. It is intended to determine between two cases when an application uses two types of content categories, which may be used in the same flow. In a specific example, it may be used for a WhatsApp or FaceTime application where a call may be either a voice or a video call. It is intended that this method can determine change in currently recognized content categories on the same flow once they have been determined to avoid running complex methods that may take further processing and memory consumption.

As shown in figure 7, at 700, the heuristic module may receive an input flow. It is intended that the signatures mark the flow as an application having two content options, at 710. In a specific case, the application may be for example, WhatsApp, FaceTime or the like. If this example, the heuristic module may review the traffic flow to determine whether it is a voice or video call. In some cases, the systems reviews bincode entry functions, at 720, to determine the traffic flow content as detailed herein. The traffic flow parameters, such as bitrate, may be reviewed periodically, for a predetermined amount of time, for example, every 10 seconds, every 15 seconds or the like, at 730. At the end of the interval at 740, the traffic parameters may be reviewed to determine whether the traffic flow is a video call, at 750. If it is ta video call, the content category will be set at 760, otherwise it may be determined as a voice call at 770. The content category may be set and after a further interval the determination of the content category can be reviewed.

Heuristics may also be used to detect change in a pattern of a content category with a lesser CPU cost than running complex methods to continuously check for content category changes. For example, if Netflix can multiplex browsing and video on a single stream, then running machine learning methods throughout to detect when there has been a change from one content type to another will be CPU intensive.

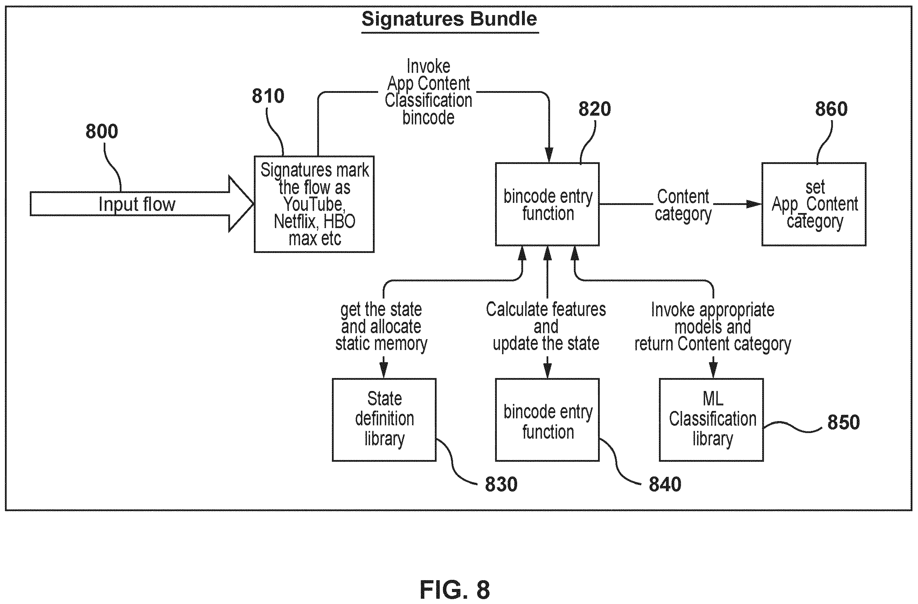

Figure 8 illustrates an embodiment of a method for using machine learning to determine content type of a traffic flow. Certain types of traffic flows may require machine learning models due to the traffic flows complex nature. An input, at 800, to these machine learning modules is intended to be the application that has already been classified, at 810. A general flow using bincodes is detailed herein, at 820. Once the application is identified, the flow is marked for further classification. The possible content categories are identified using ML models. In particular, there may be detail retrieved from the state definition library, at 830. Further features may be calculated and used to update the state of the flow, at 840. A machine learning classification library is intended to be stored in a memory component and used to invoke an appropriate model to return the content category, at 850. Once the content category has been set, at 860, the traffic flow may be monitored and reviewed at predetermined time intervals to ensure that the content category remains correct.

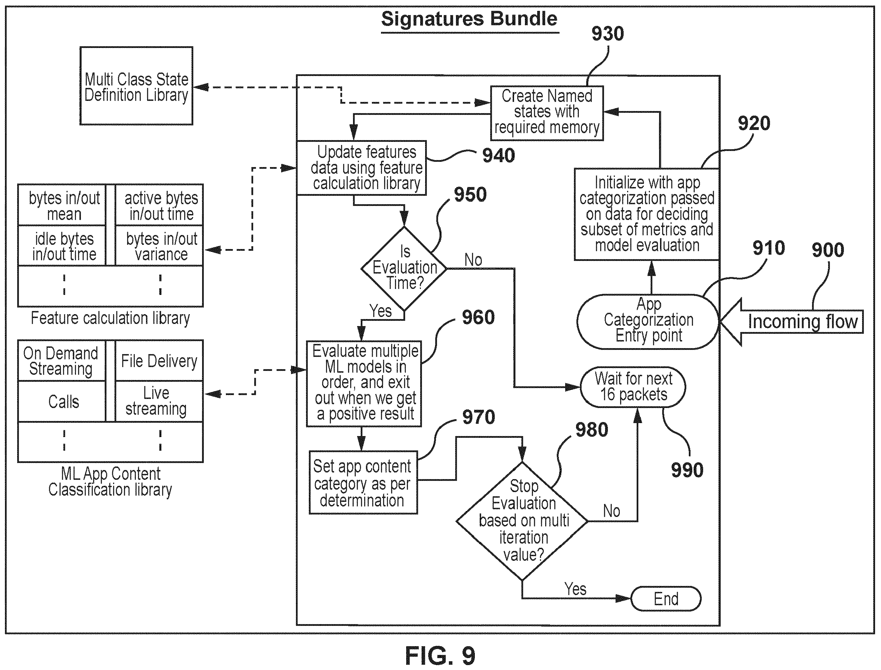

Figure 9 provides for a more detailed flow chart of an example of the method for content categorisation in a specific example. At 900, an incoming traffic flow is received and sent to the application module, at 910. At 920, initial application categorization may be done based on traffic flow metrics or a subset of traffic flow metrics. The potential content categories may be determined and be created with named states, at 930. The traffic flow may then be monitored for various features associated with the traffic parameters for a predetermined evaluation time, at 940. In this example, the evaluation time may be for at least 16 packets. It will be understood that the evaluation time may be configured and may be more or less that 16 packets or any time duration (defined as a learning period).

At evaluation time, at 950, the various machine learning models may be previewed based on the traffic parameters to determine whether there is a positive match on the content category, at 960. If so, the content category can be set at 970 and it can be determined whether the evaluation should continue or if the content is set for the length of the flow, at 980. In some cases, the machine learning module and method may be applied on an application of unknown category. In this example, it may still be possible to determine the content category of the unknown application and provide policies and determine flow statistics on the traffic flow while the application remains in an unknown category. Monitoring of the content may be done at each interval, at 990, or may be done at different intervals. In some cases, the content category can be set for the full length of the flow, while in other cases the content category may be periodically evaluated to determine if an update is required or whether the content category is still correct.

Embodiment of the system and method detailed herein are intended to make use of application recognition, for example, DRDL signature's and bincode interactions with the system, as shown previously in figure 8.

Embodiments of the system may include aspects, either within the modules noted above, or as separate components, such as: Base service detection (state machine created by various regex pattern-based signatures); BinCode engines including: Parsers; Heuristics; Length Based Service; Virtual Service; and/or Customer Virtual Service.

The Application Recognition engine and the layer before it may be responsible for reordering of TCP packets so that signature bundle gets the traffic in an ordered manner. The Application Recognition Engine may further be responsible for creating and maintaining a connection object which houses the service information and various properties information per connection (flow). Further, the Application Recognition engine may provide APIs for various operations to the base service, bincode, length based service virtual service component. Further, the Application Recognition engine is configured to provide for a sandbox area for the signature bundle to be present and execute on the packets of the connection. Since this layer encases the signature bundle any additional interaction (for example, external API calls and the like) or a new support of functionality may require a change in DRDL and signature layer API.

A base service module may be responsible for recognizing the base service of the connection using simple regex or regex + some review of packet properties that can span across a plurality of packets. Setting up the properties may be completed either directly or via the aid of parsers code in bincode. This service can receive up to a predetermined number of data packets, for example 5, 10, 15 or the like data packets, for analysis and set the base service. The module may be configured to support various calculations and may have access to at least some of the packet data. The starting state of connections that are intended to be analyzed may be a starting state, such as: Being Analyzed state, which moves to the base service on a match of signature. If after a predetermined number of packets, a match is unknown the traffic flow may be marked as Unknown.

A Bincode is a segment of signatures bundles which gives the flexibility of writing code in C format. The entire code is intended to be self contained and can call into Application Recognition APIs for any assistance. Since a bincode is part of a signatures, both parsers and heuristics modules may be able to act on the packet.

Parsers modules may be called as part of a bincode which are called from the Base Service module to parse the data out and determine the properties. The parsers are intended to be helper functions with more granular control on what to do while parsing. The parsers are intended to run when they are called from the base service parsing code.

The heuristic part of a bincode can be called on one of the three events: periodically at constant time interval of a connection; for every packet in the connection; for every data packet in the connection. This can be controlled from a Virtual service module via properties that can be accessed in heuristics code and can be used to control whether to continue calculations for the current connection or stop. In some cases, the heuristics module may review all connections.

The Length Service module may be a parallel service running to the base service which is configured to review the data packet length pattern and based on a match set the length service property can be used later in the virtual service. This module is intended to be useful in cases of applications which are generating obfuscated traffic to avoid detection. This follows the principle of fingerprinting the interaction between client and server rather than the actual data based on packet lengths or length ranges.

The Virtual service is used to further refine services on top of base service using the properties exposed by the base service. Foe example: Being Analyzed -> SSL V3 -> Facebook. Here Facebook is set using the SSL SNI value which is exposed in "Server HostName" property. The Virtual services may further be configured to control the heuristics part of bincode to direct which connections to act upon and expose their data in property format and may also be used to recognize unknown traffic using Length service property.

The Customer Virtual Service module can be used by the customer to add any type of virtual service on top of what is provided in the signature bundle. The customer can refine something based on the service recognized or the properties exposed to cater their need. Since this is external to signatures bundle it is different for each customer and would behave accordingly.

In another aspect, there is provided a system and method to provide for a confidence level of the classification of the application or content of the traffic flow. When a traffic flow for an application is not classified as the correct application traffic, this situation may be referred to as a false negative. Similarly, when some other traffic flow is classified as the application's traffic this situation can be referred to as false positive. Wherever the traffic classification information is used for a use case, knowing the accuracy of the classification can be helpful to allow for appropriate action to be taken. For cases such as charging subscribers for use, the operators generally require higher accuracy if various content types or applications are charged at different rates. Further, for some analytics related use cases the operator may be able to use classification with a lower accuracy as detailed herein.

Understanding the classification accuracy of application/content classification systems is key for building confidence in users of the system for various use cases. Some use cases, for example, billing, regulation, charging, and the like, generally require that the classification accuracy be higher. Further, the better the accuracy is, the better models can be made for understanding, for example, QoE, appropriate decisions, churn propensity, QoS classification, and the like.

Conventionally, understanding accuracy of a classification outside of a lab environment is technically challenging. In a lab, one can control the traffic, manually or automatically download an application and run the application, so the variables and circumstances are all known. In the lab, one can then test classification accuracy very closely.

But in production networks there are many variables and circumstances that are not able to be controlled. In some cases, there is no way to tell what applications are actually run, when, and by who. Further, sampling approaches where the customers are actively asked about what they do or did have been found to be cumbersome and not able to be scaled. Hence, a model for estimating accuracy of a classification is needed.

It is understood that the accuracy or confidence score of an application and/or content classification is influenced by various factors. Embodiments detailed herein define a test method, confidence score method and system to establish a confidence level on how accurate the classification is of an application and/or content.

It is intended that the confidence score may be calculated per application on a signature release date and that this confidence score is valid for that application on that date. Over time the confidence score tends to degrade as the application may release new signatures and/or new features and the like. The methodology of determining confidence score may be based on test matrix coverage and their results. The quality of a confidence score is dependent on the quality of test matrix defined for the application. Embodiments of the system and method defined herein are intended to provide for the addition of relevant test cases.

When there is a plurality of features or circumstances within a test matrix, it is beneficial to have priorities for the list of items and/or entries as detailed herein. The priorities are intended to help in influencing the right test matrix that will be used for the application. An addition of a test case into a matrix may not be enough to impact confidence score. Actual runs of the test case with a result will generally have a greater impact on the confidence score for an application.

For embodiments of the system and method detailed herein, True Positive and True Negative Results will result in an increase in confidence. Further, False Positive and False Negative Results will result in a decrease in confidence. The test matrix, which, when run, impacts confidence score, is intended to be an evolving matrix, with matrix content based on, for example, an evolved understanding of application usage and/or regional behaviors, application enhancement to support any new content type, and the like.

Confidence scores for an application with global appeal are intended to show good confidence score even with few regional coverages. This can be based on the domain understanding of the application where there have been fewer variances in traffic recognition of the application across different regions.

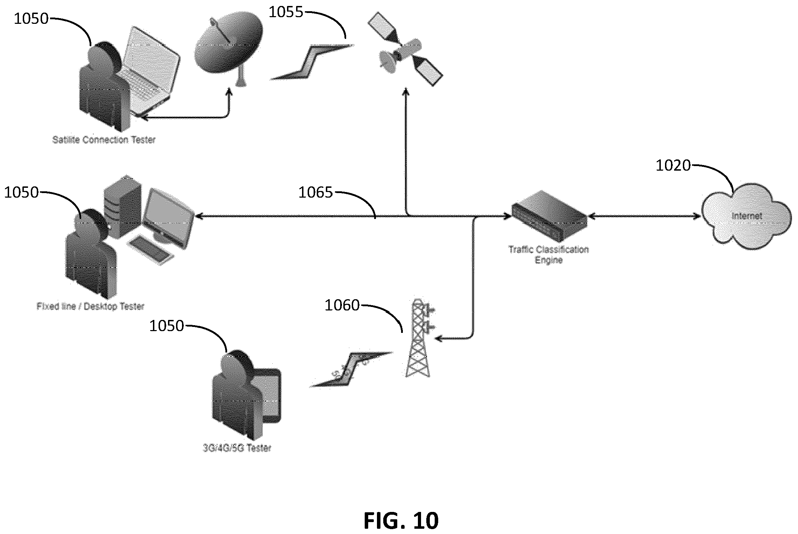

Figure 10 provides an example environment illustrating examples of different uses of an application. Figure 10 provides example testers 1050 where different kinds of tests were done over different network conditions. The testers may access the Internet 1020 via a satellite network 1055, a wireless network 1060, or wireline network 1065. It has been noted that there are differences in the way an application uses the network to access the content. Testing the application in different network conditions is intended to provide insight into the possible ways the application communicates over network. Testing the application in different devices for example, desktop/Laptop, phone, television or other supported device types is illustrated in figure 10. It is intended that the testing provide results covering possible features of each application to be tested.

In a specific example, there may be an RTT differences between wireless and wireline networks. The shaping policies may be different between these networks. Wireline (for example, fiber or DSL) networks tend to have high bandwidth and low RTT. Satellite networks have low bandwidth and a high RTT. Wireless networks have bandwidth and RTT that vary based on the technology and network deployment. As such, it is beneficial to provide testing to in multiple environments.

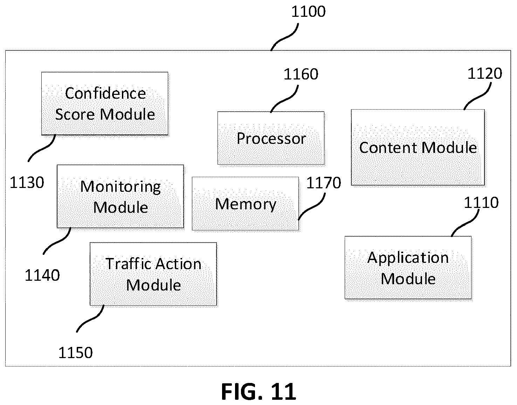

Figure 11 illustrates an embodiment of a system 1100 for determining a confidence level of a classification of application and content for traffic flows. The system is intended to include an application module 1110, a content module 1120, a confidence score module 1130, a monitoring module 1140, a traffic action module 1150, at least one processor 1160 and at least one memory component 1170. A central processing unit or the control processor may be configured to execute the instructions stored in the memory component in order for the modules to execute their functions.

The application module 1110 is configured to determine an application and application category parameters associated with a traffic flow or set of flows. The application module 1110 may review the traffic patterns and determine application circumstances and parameters. The application module may further determine if the application is in the top used applications or is a lesser used application. Lesser used applications may have a different method to determine confidence score of the classification as these applications have less active flows and less users than the top applications.

The content module 1120 is configured to determine content type and content type parameters associated with the application and traffic flow or set of flows associated with the application. The content module may review traffic patterns to determine content circumstances and parameters.

The confidence module 1130 is configured to review and create a test matrix and determine the results of the test matrix in order to determine a confidence level or confidence score associated with the application and content classification of a particular application and or content of the application. The method in which a test matrix is reviewed and the determination of a confidence score is detailed herein.

The monitoring module 1140 is configured to monitor the results from the confidence score module to determine whether any classifications should be flagged as being outside of a predetermined confidence level threshold. In some cases, the monitoring module may provide analytics associated with the classification and traffic flows. The monitoring module 1140 is further configured to provide the operator or other administrator of the system with results of the confidence score and details regarding any changes in the score. It has been determined that it is beneficial for the operator to understand why a confidence score has increased or decreased in order to monitor traffic actions, online charging and the like.

The traffic action module 1150 is configured to provide for a policy action based on the determined application and content type and the predetermined policies set by the operator or customer.

The system is configured to determine a confidence score associated with an application/content category classification. For applications, the confidence score can be referred to as application confidence score and, for content, as content application score. In some cases, the content confidence score may be determined on the content categories that an application carries/uses. In some cases, the content confidence score may be determined using a similar method for determining application confidence score, with the difference that the recognition is not of the application but of the type of content category the traffic flow is carrying.

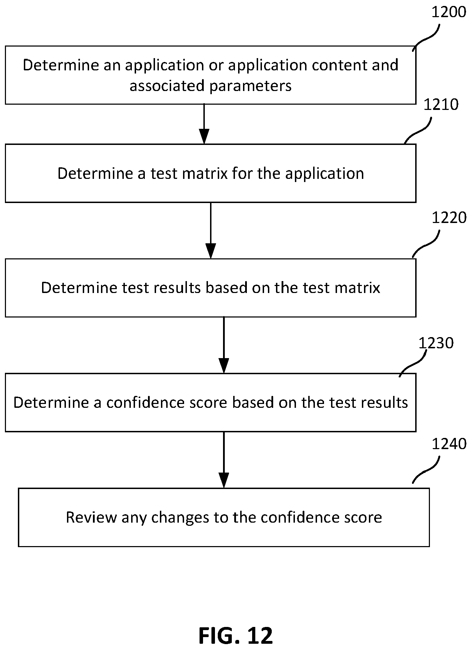

Figure 12 illustrates an example of the method for determining a confidence score according to an embodiment. At 1200, the application module 1110 determines the application of a traffic flow and/or the content module 1120 determines the content of the traffic flow. The confidence module is configured to determine a test matrix at 1210. At periodic time intervals, for example, daily, weekly, biweekly, monthly or the like, the confidence module 1130 is configured to determine test results based on the test matrix, at 1220. At 1230, the confidence module determines a confidence score based on the test results as detailed herein. At 1240, the system reviews any changes to the confidence score of the associated application or content to determine if there has been an increase or decrease in the confidence score. If there are any changes associated with the confidence score for the classification of a particular application type, the system may provide a summary as to the reasons for the changes to the confidence score based on the test results. In some cases, if there is a change to the confidence score associated with a particular application or content type, policy changes may be implemented to ensure the appropriate traffic is being manipulated in the desired manner as detailed herein.

In some cases, there may be two different Confidence Scores that are determined by the system. In some cases, a standalone confidence score (sometimes referred to as a Lab confidence score) may be calculated in a lab or test environment. Further, a Deployment Level confidence score is intended to be determined in how it is seen in the real traffic deployment (sometimes referred to as a field confidence score). The Standalone confidence score is determined by the system to determine a confidence score. This is intended to be a per application score or per content category within an application score.

The system level confidence score is an overall confidence score for a deployment. It uses various Key Performance Indicators (KPI's) like Volume, Messages per second, and the like to determine a confidence score at system level. If a consideration is volume of traffic, then the confidence score is intended to use volume to derive a confidence score for a system. In a specific example, Netflix is 60% of the usage in a network with YouTube being 30% and web browsing being 10%. In this example, the overall confidence score must be done by proportionally considering the confidence score of Netflix, YouTube and browsing. In this example, if the Netflix score is 0.9, YouTube is 0.85 and browsing is 0.5, then the overall system level confidence score will be 0.9 * 60% (Netflix) + 0.85 * 30% (YouTube) + 0.5 * 10% (browsing) = 0.845.

In some cases, the confidence level thresholds may be defined by an operator based on the use cases involved. For zero-rating an application or application category, providing a specific application or application category free of charge, the operator is likely to want a very high confidence score. Other use cases may have lower or different confidence score thresholds. Typically, a 95% confidence level has been considered an appropriate threshold for many use cases.

Embodiments of the system and method are intended to determine a confidence score for an application classification. Applications are not random. There is a method to what messages are sent and received between a client and a server or between peers. It is this deterministic nature that provides for the ability to write application classification schemes in the first place. In the code base of an application, there will be different circumstances that change the nature of what is sent or received. In some cases, it could be that a user clicks a particular button, or a circumstance could be time of day, or the device or operating system (OS) the app is running on, which country it's running in, or the like.

Circumstances come in many dimensions. These circumstances that can change network traffic are finite, even if the true complexity is known only to the application developers. By categorizing these circumstances, and testing them, one by one, the system is able to determine aspects associated with the application. First the system may determine the variability of the application. Some applications, for example FTP, will barely ever change its behavior. Other applications, for example Skype, change their behavior frequently. For the application, the terminology used will be as that FTP has low variability, and Skype has high variability. From the review of these circumstances, the system is able to determine a test matrix for circumstances. It then follows that accuracy for applications will be higher for low variability, and lower for high variability.

Further, it follows that accuracy will be higher if the testing covers a large portion of the test matrix. Putting these two variables together is intended to provide for a good approximation of accuracy at the time of testing. Unfortunately, time itself introduces another variable. As applications change their circumstances and software over time, the test cases and variability are only true at the time the tests are run. As such, time since the testing was done is a third variable needed to estimate accuracy.

As an example, an application may change circumstances over time due to software upgrades, such as when Apple provides an upgrade to an iPhone or when Amazon updates its associated application or the like. There may be features within an application that may be enabled at a later date so the behavior of the application observed on the network may be much later than the actual application's release date. For example, a new protocol may be built into the application and be tested on a small set of customers, but after a few months the company may enable the new protocol worldwide by pushing a configuration setting to the application. The application's circumstances may be viewed differently after the configuration setting update.

It has been determined that there may be three key mechanisms to estimate classification accuracy: Application variability (for various circumstances), Ratio of test matrix of circumstances tested successfully; and Time since the release. In some cases, since variable applications will be more sensitive to the time since release it may be possible to consider the application variability and time since release as a same or similar mechanisms.

In some specific examples, the variability of FTP is near zero. FTP has not changed since its launch and may not change unless a new version of it is published in future. In a lab circumstance, the system may successfully cover 25/25 conceived circumstances for FTP. The accuracy of FTP classification in the running system is close to 100%. False positives are near zero, false negatives are near zero, true positives are near 100%, and true negatives are near 100%.

On the other hand, the variability applications like Skype (for example) is very high. The system is configured to test for 200/200 circumstances for Skype, but there are another 25000 circumstances identified but not yet tested for in this example. In a production system that was running a classification library 3 months old, results of the classification were reviewed. The accuracy of Skype is at best 75%. False positives do occur, false negatives are at 25%+, true positives at 75%, and true negatives do occur. It has been determined that the precision of this model will struggle to ever get to 100% because of the black box nature of applications with high variability.

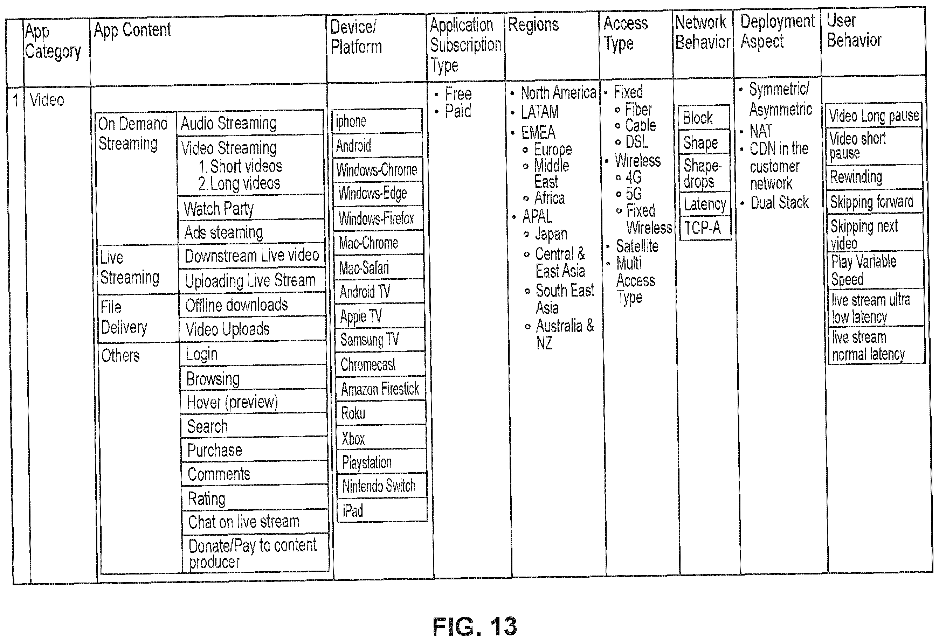

As illustrated in the above examples, some applications may require testing for a large number of circumstances. To do that, a system is intended to be built that automatically proceeds through the test matrix and tests for one combination of circumstances at a time and records the results for applications that are considered to be the top or more used applications. Figure 13 illustrates one example of a test matrix for a single application category wherein the application is considered to be one of the top or more used applications.

Figure 13 shows a different list of scenarios which are coded (High important, medium important and low important) with different importance. In this example case, high important cases will have more test runs and low important testcases will have less test runs. The high important priority (P1) is intended to be the most used use-cases of the application. In an example where a test matrix is being used for YouTube, a P1 example would be YouTube Video watching. In this specific example, a medium priority (P2) could be considered an offline download of YouTube as P2 is intended to be lesser but still significantly used use-cases. A lower priority or important scenario (P3) level test case for the matrix would be a remaining lower important case for example, subscription purchasing in YouTube.

It will be understood that various factors influence the confidence score, including test matrix coverage, test results, test result consistency and the like. The higher the test matrix coverage the higher chance the confidence score is an accurate representation. The confidence score is intended to be influenced by all P1, P2 and P3 test cases. The higher coverage of P1 cases would result in a chance of a higher confidence score compared to P2/P3 cases. To achieve this, the test cases are associated with weights wherein the weightage P1> weightage P2> weightage P3. The system may further be configured with a test execution cadence for P1, P2 and P3 to allow for higher relevant test cases of P1 to run for frequency (lesser cadence) in comparison to lesser relevant P2 and P3 cases (higher cadence). The cadence may also determine the set of test cases to be considered at which time intervals.

Test results of a test case are intended to be binary in nature. Each test case may either pass or fail, 1 or 0 result, or the like. A pass is intended to improve the confidence score, such that a pass result will have an ability to increase the confidence score by the weightage factor of the test case.

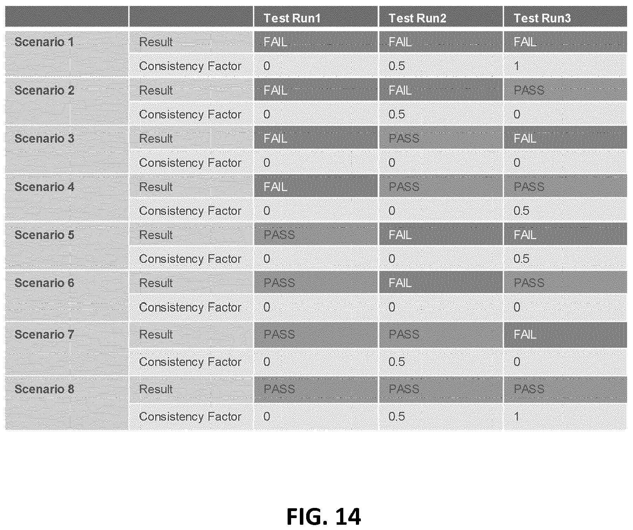

The test result consistency is also intended to factor into the resulting confidence score. Figure 14 illustrates a table showing 3 test runs of 8 scenarios and the resulting consistency factor for each scenario. Consistently passing tests provides for higher confidence scores. Inconsistent results lower the confidence score even if the current result is a pass. In this example, the consistency factor lies between 0 and 1 and it takes consecutive equal results to increase the consistency factor to 1. It will be understood that different ranges for a consistency factor may be used, as well as the increase in consistency factor may be larger or smaller.

The system is configured to assign weights to each priority of test cases. In this example, P1 may be assigned a weight of 3, P2 a weight of 2 and P3 a weight of 1. It will be understood that other weights may be used. Each test result value defined will be considered as a multiplier factor of the weights (pass - 1 and fail - 0). Further the test result consistency factor is a multiplier to the result and weightage value.

Confidence score for a time period is calculated against the planned set of test cases. Confidence score may be determined, for example, daily, weekly, biweekly or the like. In this specific example the test matrix value is: Num(Planned P1 cases)* 3+Num(Planned P2 cases)* 2+Num(Planned P3 cases). Further the test run value is calculated as the sum of confidence score of all test cases run for the time period, namely, $\Sigma$Weight(testcase)*Result_Val(test case $\Sigma$ )*Consistency_Factor(test case).

The confidence score is then determined using the factor of:

$$\frac{(Test\ Run\ Value)}{(Test\ Matrix\ Value)}$$

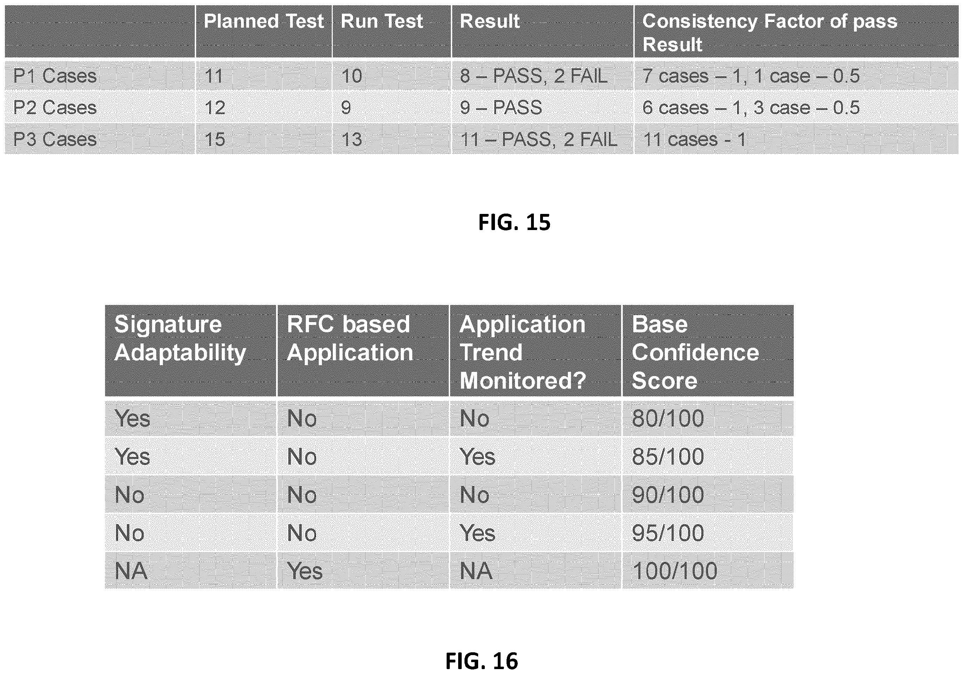

Figure 15 provides for a specific example of a confidence score valuation. The Test matrix value is the max confidence score value possible for the test period. In figure 15, this would be: 11*3 + 12*2 + 15 = 72. The Test run value is calculated on test runs, results, and a consistency factor. In the example in figure 7 it would be 7*3*1 + 1*3*0.5 + 6*2*1 + 3*2*0.5+ 11*1*1 = 48.5. In this example, the confidence score would be 48.5/72 = 0.674 or 67.4%.

It will be understood that the confidence score as a standalone number may not be beneficial to the customer or operator. As such, the system is configured to provide context for the application confidence score including details with respect to the confidence score calculation methodology and what led to any increase or decrease in the confidence score.

Executing all the testcases covered in the test matrix is intended to be efficient to run and the execution data is intended to be collected automatically and stored. The stored test result may then be used for the calculation of accuracy / confidence score. All the test data was collected for the test result storage and used for the calculation of accuracy / confidence score. In some cases, the confidence score to be normalized and translated to a High, medium, or low confidence value or otherwise presented to the customer to be able to be used.

The system is intended to provide for a confidence score calculation methodology and context details for any decrease or increase in the confidence score. The system may provide a summary for any failed test cases, untested test cases, added test cases for new features, fixed test cases or recovered test case coverage or any further detail that may have led to an increase or decrease in confidence score. In the example shown in figure 15, the context provided could note that the confidence score has been reduced due to missed test cases for the application on device X as well as failed test scenario with respect to content Y.

The system may provide for a confidence score for less used applications as well as the top used applications. As lesser used applications may not have the same level of data to determine or create a test matrix, the system may use other parameters to determine the confidence score. Further, there may not be the ability to spend the time for testing and developing test matrices for these lesser used applications. As such, it has been found that confidence score on lesser used applications can be determined in a secondary manner. In some cases, the system may use, for example, incoming ticket history, signature adaptability, application with trend analysis support or the like.

The system may use ticket history as a key parameter for confidence score for a vast variety of applications as ticket history may be one of a few sources to data to indicate confidence on lesser used applications. It is intended that ticket history be used only for a recent duration, for example 2 weeks, 1 month, 6 weeks or the like. It has been found that older history is less relevant to the confidence score. Tickets tend to represent failures in test cases that are run in the external world. If there is a large enough failure for an application with will be reflected in the form of tickets. Tickets have an impact on the confidence score in that once the tickets are fixed the number of actual tickets is not used for the score. Tickets that are open and have already been added to the confidence score should not further impact the score. The incoming rate of the tickets has an impact on the score with tickets coming more frequently impacting the confidence score more than a sudden burst of tickets in a single time frame. Further recent tickets are configured to have a higher impact than an earlier occurrence of one or more tickets.

Signature adaptability also impacts the confidence score on lesser used application. The system is configured to add recognition based on signature determination results, for example heuristics based techniques. In some cases, based on the patterns and the frequency of patterns changing may require a signature to be revisited more frequently. For example, it has been found that Voice-Over IP (VoIP) patterns can change and be misclassified as other applications. These signature techniques are seen for applications which are adaptive in nature when external actions (for example, shaping, blocking, or the like) are applied in order to overcome these actions. In these cases, the confidence score of an application may be lower to begin with as compared to other applications which do not employ the same type of adaptive techniques.

The system is configured to further review applications with trend analysis support. There are operator and/or customer probes that may analyze trend changes for applications not considered to be top applications. Any application that is monitored by a trend analysis is intended to have an increased confidence score as the trend analysis monitors the application classification. It will be understood that having trend analysis support may increase the confidence score but not having trend analysis support should not decrease or reduce the confidences score of these other applications.

Figure 16 provides for a table of base confidence scores that may be used by the system for applications that are not considered top applications. Applications which have signature adaptability and are not trend monitored may only have a base confidence score of 80%. Applicants that are based on Request for Comments (RFC) documentation may have a perfect 100% score as they conform to a specific standard. Examples of these purely RFC based applications may be DNS, FTP or the like. The system is configured to update these base scores based on various parameters.

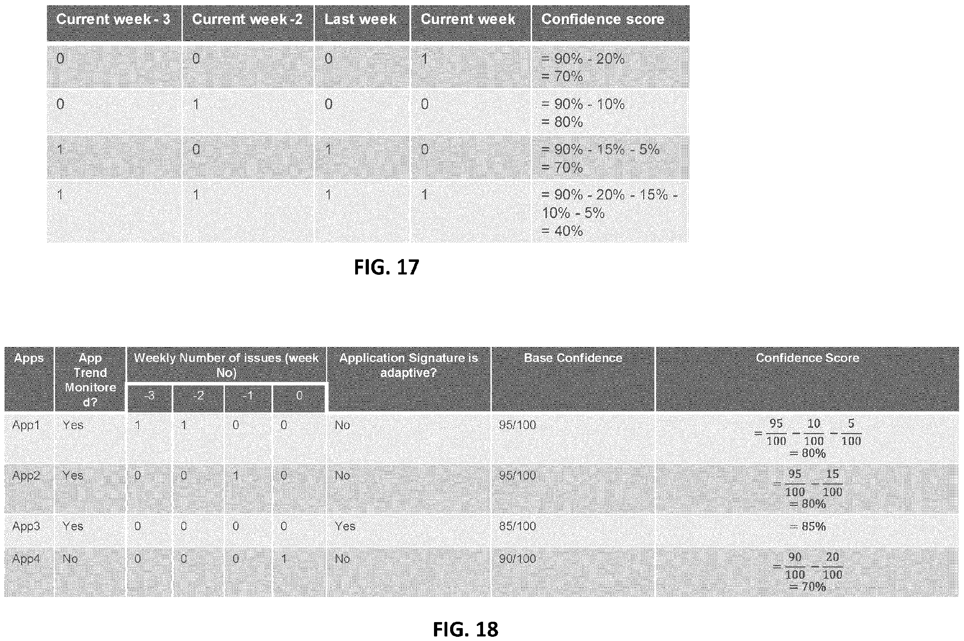

Figure 17 illustrates an example of 4 scenarios over a 4 week period. In this example each application ticket is treated with the same weight irrespective of how it was internally found, whether via customer, internal testing, external testing, or the like. The system determines the impact of open tickets and not the actual number of tickets open. One or more tickets in the current time period, in this example a week, will have the highest impact and as tickets move to earlier weeks, the impact is intended to be reduced. In this example, the impact is 20% in the current week and the impact reduces 5% as the tickets move to earlier weeks. It will be understood that the impact amount may be changed and may reflect the operator's environment. An active ticket will be considered to be impacting the current week.

The system is configured to determine the confidence score as follows:

$$Confidence\ Score = \frac{Base\ Confidence\ Score}{100} - \sum_{week=0}^{week=-3} Issue\_seen(week) * \frac{Issue\ Weight(week)}{100}$$

The base confidence score is as shown in figure 16 and issue seen on any incoming tickets in the time period under consideration. Figure 18 illustrates calculations with respect to 4 different applications when the various parameters are reviewed. The confidence score context is intended to be provided to the customer or operator similarly to the top application context. If the confidence score has increased or decreased an operator or customer may receive known issue summers or detail with respect to any fixes.

Automating the test data collection would support in generating accurate values for application classification accuracy / confidence score. Automating the execution of test is also intended to help in covering all the test matrix and run multiple iteration in short time. Manual tests are executed in places where there is no possibility of automation. However, the test result collection is intended to be automated by the system.

In some cases, remote and/or regional tests are some of the few tests that may be required to be run in a specific region or network type. In an example, this may be achieved from the internet through the VPN Server and the un-tunneled traffic will pass through the traffic classification engine and exit to internet. Even here the test results are intended to be automatically collected and used. The majority of the test will be executed using various different automation tools that will help in operating the applications automatically. In these cases, the testing is intended to be end-to-end automated.

Application behaviors and how frequently the application changes affect the confidence and/or accuracy of the application classification. A few examples as to factors that may determine how frequent the application change include: a new signature find based on Lab test, a new signature find based on traffic seen on customer network and/or beta sites installed on customer traffic, how frequently server IP or domains seen for an application or other cases which request a signature change for an application.

Embodiments of the system and method are further configured to determine a Confidence Score of an application category. Confidence scores of an application category are intended to be an average of confidence score of the applications that are contained within an application category. In some cases, the system can use a proportion of popularity, actual volume of traffic to do a weighted average to derive a system level confidence score.

Normally, for all the top applications, the system is able to provide a confidence score of close to or 100%. When the confidence score value drops, then the reason for the drop is provided. In this regard, the system provides what is the percentage associated with each of the following cases in drops: False Positives and False Negatives.

A True or False result would be determined by giving an application and/or content category X under consideration. True would mean that the detection was correct on input being X or not being X. False would mean that it was wrongly detected.

Further, a Positive or Negative would occur when application and/or content category X is under consideration. Positive would mean X and Negative would mean Not X.

| TRUE POSITIVE | FALSE POSITIVE |
|---|---|
| Application was X and detected as X | Application was Y (or not X in general) and was detected as X |
| TRUE NEGATIVE | FALSE NEGATIVE |
| Application was not X and was detected as not X. | Application was X but detected as not X. |

Confidence score plays a key role in policy enforcement. The confidence score is a key indicator by which an operator can decide whether policy enforcement can be done on an application, category or whether this may not be possible.

One example of the use of the confidence score is in specialized charting. In certain plans, the operator may choose to charge a premium for a certain application or application category. The operator may want to know that the charge is enforced only while the application recognition has a high confidence. The confidence level of an application may reduce over time because the operator has not taken the latest DRDL. In this example, if the Application changed in between breaking the previous recognition mechanisms, there would be a finite time in which a new pack would be provided. There are occasions where operators do not upgrade the packs. Tests run on previous packs will reduce the confidence score. The operator can check in the policy and/or configuration that if the confidence score is not HIGH, then the premium is not charged. This way, on a decrease of confidence score, the premium is not charged, and the operator may avoid legal issues associated with overcharging on an inappropriate basis.

Additionally, the policy enforcement could use what was the quantum of False Positives and False Negatives in policy enforcement. If the application having a premium charge is Netflix, and its confidence dropped due to False Negatives, it would mean that the application recognition is not identifying all the Netflix traffic as Netflix but instead as some other application. This is not considered an issue for Premium charging because the operator is not incorrectly charging but is instead losing revenue because some of the Netflix flows were not detected as Netflix. However, in case of False Negatives where another application is detected incorrectly as Netflix, charging this wrongly identified traffic flow to a customer is not correct.

In a further example, confidence score may be used in blocking traffic flows. An operator may decide to block an application / application category / content category. In cases where False Positives are higher (policy is for application X, but DRDL incorrectly detected application Y as application X), operator may choose not to block application X to avoid blocking a different application traffic (in this example, application Y).

Embodiments of the system and method are further configured to determine a Confidence score of content category within an application. The method to determine a confidence score of a content category is similar to confidence score of an application. For a confidence score on a content category within an application, the score may be determined on recognition and test matrix on content category after establishing the application.

Embodiments of the system and method are further configured to determine a Confidence score of content category within an application category. Confidence score of a content category within the application category is an average of the confidence scores of the content categories within applications contained in application category. It may be preferable to determine this score as a system level score. In some cases, the parameters used may include, for example, a proportion of popularity, actual volume of traffic to do a weighted average to derive a system level confidence score, and the like.

Embodiments of the system and method are further configured to determine a confidence score of a content category. This score is intended to be an average score of all content categories. In some cases, parameters used may be, for example, proportion of popularity, actual volume of traffic or any other metrics of interest to calculate a weightage average that would be useful.

In the preceding description, for purposes of explanation, numerous details are set forth in order to provide a thorough understanding of the embodiments. However, it will be apparent to one skilled in the art that these specific details may not be required. In other instances, well-known structures may be shown in block diagram form in order not to obscure the understanding. For example, specific details are not provided as to whether the embodiments or elements thereof described herein are implemented as a software routine, hardware circuit, firmware, or a combination thereof.

Embodiments of the disclosure or elements thereof can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

**Claims**

1. A method for classifying application and content in a computer network, the method comprising:

determining an application associated with a traffic flow;
determining at least one type of content category associated with the application;
reviewing packet parameters to determine the content category of the traffic flow; and
monitoring the traffic flow for any changes to the packet parameters that would indicate a change in the content category of the traffic flow.

2. The method according to claim 1, wherein the packet parameters comprise signatures of the traffic flow and determining the content category comprises matching the signature of the traffic flow with a previously stored signature of the content category.

3. The method according to claim 1 or 2, wherein the packet parameters comprise bincode entry functions and determining the content category comprises reviewing the bincode and a bitrate of the traffic flow.

4. The method according to any one of claims 1 to 3, further comprising:

    monitoring the traffic flow for a predetermined evaluation time prior to
    determining an application associated with the traffic flow.

5. The method according to any one of claims 1 to 4,wherein the monitoring of the traffic flow comprises waiting for a predetermined number of packets before evaluating whether there has been a change in the content category.

6. A system for classifying application and content in a computer network, the system comprising:

    an application module configured to determine an application associated with a traffic flow;
    a signature module, a heuristic module and a machine learning module configured to review packet parameters to determine a content category associated with the traffic flow and any changes to the content category associated with the traffic flow.

7. The system according to claim 6, wherein the signature module is configured to determine packet parameters comprising of signatures of the traffic flow and determine the content category comprises matching the signature of the traffic flow with a previously stored signature of the content category.

8. The system according to claim 6 or 7, wherein the heuristic module is configured to determine packet parameters comprising bincode entry functions and determine the content category comprises reviewing the bincode and a bitrate of the traffic flow.

9. The system according to any one of claims 6 to 8, wherein the traffic flow is monitored for a predetermined evaluation time prior to determining an application associated with the traffic flow.

10. A method for determining a confidence score of an application or content classification of network traffic comprising:

    determining an application or content classification of a traffic flow;
    determining a test matrix for the application or content classification;
    determining test results based on the test matrix; and
    determining a confidence score based on the test matrix.

11. A method according to claim 10 further comprising:

    determining any increase or decrease to the confidence score in comparison to a previously determined confidence score for the application or content classification; and
    determining any changes to any traffic policies based on the increase or decrease of the confidence score.

12. A method according to claim 11 wherein determining an application or content classification comprises determining whether the application is a top used application.

13. A method according to claim 12 wherein if the application is a top used application determining a priority level for each test in the test matrix.

**14.** A method according to claim 13 wherein if the application is a top used application, determining test results comprises:

  determining a pass or fail result per test in the test matrix;
  determining a consistency factor fear each test; and
  determining if any planned test in the test matrix was not run.

**15.** A method according to claim 13 wherein if the application is not a top used application determining a test matrix comprises:

  determining a signature adaptability of the application or content classification;
  determining trend analysis of the application or content classification; and
  determine a ticket count for the application or content classification.

Figure 1

EP 4 401 377 A2

**FIG. 2**

**FIG. 3**

## DRDL Categories

| |
|---|
| Web Browsing |
| Streaming Video |
| Social Media |
| VoIP |
| Gaming |
| Content Downstream |
| Content Upstream |

## AppLogic Categories

| |
|---|
| General Web Apps |
| Video |
| Television |
| Social Media |
| Communication |
| Conferencing |
| Cloud Gaming |
| Device Gaming |
| Audio |
| File Sharing |
| VPN |
| IoT |
| Other Apps |
| Infrastructure Protocols |
| Custom |
| Unclassified |

**FIG. 4A**

EP 4 401 377 A2

| General Web Apps | Video | Television | Social Media | Communication | Conferencing |
|---|---|---|---|---|---|
| Google Search | YouTube | YouTube TV | Instagram | WhatsApp | WebEx |
| Yahoo Search | Netflix | Sling TV | Facebook | Facebook Messenger | Google Meet |
| Bing | Amazon Prime | Philo TV | TikTok | FaceTime | Amazon Chime |
| DuckDuckGo | Disney+ | Fubo TV | Snapchat | imo | Zoom |
| OfferUp | Hulu | Paramount+ | Twitter | WeChat | Teams |
| Craigs List | HBO Max | Peacock TV | Clubhouse | Telegram | Slack |
| CNN | Discovery+ | Tubi TV | | Discord | Goto Meeting |
| CNBC | | PPTV TV | | Signal | MatterMost |
| BBC | | FilmOn TV | | Viber | Zoho Meeting |
| Aljazeera | | Sky TV | | Skype | Bluejeans |
| AT&T | | NowTV | | iMessage | |
| Amazon | | | | Line | |
| Generic Web Browsing | | | | | |

| Cloud Gaming | Device Gaming | Audio | File Sharing | VPN | IoT |
|---|---|---|---|---|---|
| GeForce Now | PUBG | Apple Music | iCloud | iCloud Private Relay | Tesla |
| xCloud | Call of Duty | Spotify | Office 365 | NordVPN | Alexa |
| Playstation Now | Minecraft | Pandora | BitTorrent | Cisco VPN | Nest |
| Amazon Luna | Among Us | YouTube Music | Google Drive | FortinetVPN | Rings |
| PaperSpace | Clash Royale | iHeartRadio | OneDrive | ExpressVPN | Skybell |
| Shadow | Fortnite | Google Play Music | Amazon Drive | OpenVPN | Wyze |
| Vortex | Candy Crush | Amazon Music | Dropbox | Wireguard | Tuya Smart |
| Steam | Roblox | SoundCloud | 4shared | Surfshark | HomeKit |
| | Xbox | Shazam | Antivirus | ProtonVPN | Ecobee |
| | Playstation | Sirius XM | Software Updates | ipVanish | Philips Hue |
| | Nvidia Games | TuneIn Radio | | PPTP | Google Home |
| | Nintendo | | | | |

# FIG. 4B

**General Web Apps**
- Browsing
- File Delivery
- On-Demand Streaming
- Other

**Video**
- File Delivery
- On-Demand Streaming
- Live Streaming
- Other

**Television**
- File Delivery
- On-Demand Streaming
- Live Streaming
- Other

**Social Media**
- File Delivery
- On-Demand Streaming
- Live Streaming
- Voice Call
- Video Call
- Messaging
- Other

**Communication**
- File Delivery
- Voice Call
- Video Call
- Messaging
- Other

**Conferencing**
- File Delivery
- Voice Call
- Video Call
- Messaging
- Other

**Cloud Gaming**
- File Delivery
- Live Streaming
- Game Play
- VR
- Messaging
- Other

**Device Gaming**
- File Delivery
- Game Play
- VR
- Other

**Audio**
- File Delivery
- On-Demand Streaming
- Other

**File Sharing**
- File Delivery
- Other

**IoT**
- File Delivery
- On-Demand Streaming
- Live Streaming
- Machine to Machine
- Other

**VPN**
- File Delivery
- On-Demand Streaming
- Live Streaming
- Voice Call
- Video Call
- Other

**OtherApps**
- File Delivery
- On-Demand Streaming
- Live Streaming
- Voice Call
- Video Call
- Other

**Infrastructure Protocols**
- Other

**Unclassified**
- File Delivery
- On-Demand Streaming
- Live Streaming
- Voice Call
- Video Call
- Other

**Custom**
- File Delivery
- On-Demand Streaming
- Live Streaming
- Voice Call
- Video Call
- Other

## FIG. 5

EP 4 401 377 A2

**Signatures Bundle**

600 — Input flow

610 — Signature VS entry

620 — Identify Content category (using host_names, patterns etc)

630 — Set Content Category

FIG. 6

**Signatures Bundle**

FIG. 7

## Signatures Bundle

**800**

Input flow →

**810**
Signatures mark the flow as YouTube, Netflix, HBO max etc

Invoke App Content Classification bincode

**820**
bincode entry function

Content category →

**860**
set App_Content category

get the state and allocate static memory

Calculate features and update the state

Invoke appropriate models and return Content category

**State definition library** — **830**

**bincode entry function** — **840**

**ML Classification library** — **850**

**FIG. 8**

EP 4 401 377 A2

**Signatures Bundle**

FIG. 9

FIG. 10

**FIG. 11**

1200

Determine an application or application content and associated parameters

1210

Determine a test matrix for the application

1220

Determine test results based on the test matrix

1230

Determine a confidence score based on the test results

1240

Review any changes to the confidence score

**FIG. 12**

| | App Category | App Content | | Device/ Platform | Application Subscription Type | Regions | Access Type | Network Behavior | Deployment Aspect | User Behavior |
|---|---|---|---|---|---|---|---|---|---|---|
| 1 | Video | | | | • Free<br>• Paid | • North America<br>• LATAM<br>• EMEA<br>  ○ Europe<br>  ○ Middle East<br>  ○ Africa<br>• APAL<br>  ○ Japan<br>  ○ Central & East Asia<br>  ○ South East Asia<br>  ○ Australia & NZ | • Fixed<br>  ○ Fiber<br>  ○ Cable<br>  ○ DSL<br>• Wireless<br>  ○ 4G<br>  ○ 5G<br>  ○ Fixed Wireless<br>• Satellite<br>• Multi Access Type | Block<br>Shape<br>Shape-drops<br>Latency<br>TCP-A | • Symmetric/ Asymmetric<br>• NAT<br>• CDN in the customer network<br>• Dual Stack | Video Long pause<br>Video short pause<br>Rewinding<br>Skipping forward<br>Skipping next video<br>Play Variable Speed<br>live stream ultra low latency<br>live stream normal latency |
| | | On Demand Streaming | Audio Streaming | iphone | | | | | | |
| | | | Video Streaming<br>1. Short videos<br>2. Long videos | Android | | | | | | |
| | | | | Windows-Chrome | | | | | | |
| | | | Watch Party | Windows-Edge | | | | | | |
| | | | Ads steaming | Windows-Firefox | | | | | | |
| | | Live Streaming | Downstream Live video | Mac-Chrome | | | | | | |
| | | | Uploading Live Stream | Mac-Safari | | | | | | |
| | | File Delivery | Offline downloads | Android TV | | | | | | |
| | | | Video Uploads | Apple TV | | | | | | |
| | | Others | Login | Samsung TV | | | | | | |
| | | | Browsing | Chromecast | | | | | | |
| | | | Hover (preview) | Amazon Firestick | | | | | | |
| | | | Search | Roku | | | | | | |
| | | | Purchase | Xbox | | | | | | |
| | | | Comments | Playstation | | | | | | |
| | | | Rating | Nintendo Switch | | | | | | |
| | | | Chat on live stream | iPad | | | | | | |
| | | | Donate/Pay to content producer | | | | | | | |

FIG. 13

EP 4 401 377 A2

| | | Test Run1 | Test Run2 | Test Run3 |
|---|---|---|---|---|
| Scenario 1 | Result | FAIL | FAIL | FAIL |
| | Consistency Factor | 0 | 0.5 | 1 |
| Scenario 2 | Result | FAIL | FAIL | PASS |
| | Consistency Factor | 0 | 0.5 | 0 |
| Scenario 3 | Result | FAIL | PASS | FAIL |
| | Consistency Factor | 0 | 0 | 0 |
| Scenario 4 | Result | FAIL | PASS | PASS |
| | Consistency Factor | 0 | 0 | 0.5 |
| Scenario 5 | Result | PASS | FAIL | FAIL |
| | Consistency Factor | 0 | 0 | 0.5 |
| Scenario 6 | Result | PASS | FAIL | PASS |
| | Consistency Factor | 0 | 0 | 0 |
| Scenario 7 | Result | PASS | PASS | FAIL |
| | Consistency Factor | 0 | 0.5 | 0 |
| Scenario 8 | Result | PASS | PASS | PASS |
| | Consistency Factor | 0 | 0.5 | 1 |

**FIG. 14**

|  | Planned Test | Run Test | Result | Consistency Factor of pass Result |
|---|---|---|---|---|
| P1 Cases | 11 | 10 | 8 – PASS, 2 FAIL | 7 cases – 1, 1 case – 0.5 |
| P2 Cases | 12 | 9 | 9 – PASS | 6 cases – 1, 3 case – 0.5 |
| P3 Cases | 15 | 13 | 11 – PASS, 2 FAIL | 11 cases - 1 |

**FIG. 15**

| Signature Adaptability | RFC based Application | Application Trend Monitored? | Base Confidence Score |
|---|---|---|---|
| Yes | No | No | 80/100 |
| Yes | No | Yes | 85/100 |
| No | No | No | 90/100 |
| No | No | Yes | 95/100 |
| NA | Yes | NA | 100/100 |

**FIG. 16**

| Current week - 3 | Current week -2 | Last week | Current week | Confidence score |
|---|---|---|---|---|
| 0 | 0 | 0 | 1 | = 90% - 20% = 70% |
| 0 | 1 | 0 | 0 | = 90% - 10% = 80% |
| 1 | 0 | 1 | 0 | = 90% - 15% - 5% = 70% |
| 1 | 1 | 1 | 1 | = 90% - 20% - 15% - 10% - 5% = 40% |

**FIG. 17**

EP 4 401 377 A2

| Apps | App Trend Monitored? | Weekly Number of issues (week No) | | | | Application Signature is adaptive? | Base Confidence | Confidence Score |
|---|---|---|---|---|---|---|---|---|
| | | -3 | -2 | -1 | 0 | | | |
| App1 | Yes | 1 | 1 | 0 | 0 | No | 95/100 | $= \dfrac{95}{100} - \dfrac{10}{100} - \dfrac{5}{100}$ $= 80\%$ |
| App2 | Yes | 0 | 0 | 1 | 0 | No | 95/100 | $= \dfrac{95}{100} - \dfrac{15}{100}$ $= 80\%$ |
| App3 | Yes | 0 | 0 | 0 | 0 | Yes | 85/100 | $= 85\%$ |
| App4 | No | 0 | 0 | 0 | 1 | No | 90/100 | $= \dfrac{90}{100} - \dfrac{20}{100}$ $= 70\%$ |

**FIG. 18**

**EP 4 401 377 A2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63433919
- US 63476811